# EUROPÄISCHE PATENTSCHRIFT

(11) **EP 3 395 216 B1**
(45) Veröffentlichungstag und Bekanntmachung des Hinweises auf die Patenterteilung: **20.10.2021**
(21) Anmeldenummer: 18169709.5
(22) Anmeldetag: 27.04.2018
(51) Int. Cl.: A47J 36/32

(54) **VERFAHREN ZUR KOORDINIERTEN ANSTEUERUNG VON MINDESTENS ZWEI GERÄTEN**
METHOD FOR COORDINATED DRIVING OF AT LEAST TWO DEVICES
PROCÉDÉ DE COMMANDE COORDONNÉE D'AU MOINS DEUX APPAREILS

(30) Priorität: 27.04.2017 DE 102017109109
(43) Veröffentlichungstag der Anmeldung: 31.10.2018
(73) Patentinhaber: Vorwerk & Co. Interholding GmbH, 42270 Wuppertal (DE)
(72) Erfinder: YAN, Wenjie, 40549 Düsseldorf (DE); Helmich, Martin, 47055 Duisburg (DE); Ortmann, Roman, 47057 Duisburg (DE)
(74) Vertreter: Bals, Rüdiger

(56) Entgegenhaltungen:
- EP-A1- 3 056 882
- DE-A1-102011 085 521
- DE-A1-102014 112 115
- US-A1- 2016 309 954

## Beschreibung

Die vorliegende Erfindung betrifft ein Verfahren zur koordinierten Ansteuerung von mindestens zwei Geräten gemäß des Oberbegriffs vom unabhängigen Verfahrensanspruch. Ferner bezieht sich die Erfindung auf eine Vorrichtung zur koordinierten Ansteuerung von mindestens zwei Geräten gemäß dem unabhängigen Vorrichtungsanspruch.

Es ist aus dem Stand der Technik bekannt, dass die Funktionalitäten verschiedener Geräte in manueller Weise komplementär genutzt werden können. Bspw. sind in einer Küche verschiedene Geräte zur Bereitstellung von Funktionen zur Zubereitung von Lebensmitteln vorhanden. Bei einer Zubereitung gemäß eines Rezepts verwendet ein Benutzer diese unterschiedlichen Geräte entsprechend der einzelnen Rezeptschritte, sodass bspw. zunächst ein Braten des Lebensmittels mit einem Kochfeld und anschließend ein Garen in einem Backofen erfolgt.

Ebenfalls bekannt sind Küchenmaschinen, welche eine zumindest teilweise automatisierte Zubereitung von Lebensmitteln ermöglichen. Hierbei bietet eine einzige Küchenmaschine bereits mehrere verschiedene Funktionalitäten zur Zubereitung, wie bspw. ein Schneiden und ein (gleichzeitiges) Erhitzen von Lebensmitteln. Es ist bereits möglich, dass diese verschiedenen Funktionalitäten des einzelnen Gerätes, zumindest teilweise automatisiert, komplementär genutzt werden können.

EP 3 056 882 A1 offenbart ein Verfahren zur koordinierten Ansteuerung von mindestens zwei Geräten, welche sich in Bezug auf eine jeweilige Funktionalität unterscheiden, wobei eine Globalebene vorgesehen ist, an welche die Geräte mindestens eine Anfrageinformation übertragen, wobei hierzu die nachfolgenden Schritte durchgeführt werden: a) Erzeugen der Anfrageinformation am ersten Gerät, b) Übertragen der Anfrageinformation an die Globalebene.

Allerdings ist oft ein Nachteil, dass die komplementäre Nutzung verschiedener Funktionalitäten von verschiedenen Geräten nur manuell oder sehr eingeschränkt automatisiert erfolgen kann. Des Weiteren ist die Kommunikation zwischen verschiedenen Geräten häufig nur eingeschränkt möglich, da die Geräte unterschiedliche Kommunikationsschnittstellen aufweisen. Dies erschwert die Automatisierung und Kombination der Funktionalitäten der Geräte zusätzlich. Ein weiterer Nachteil ist daher, dass für eine datentechnische Kommunikation zwischen verschiedenen Geräten die Kompatibilität oft nicht gewährleistet ist.

Es ist daher eine Aufgabe der vorliegenden Erfindung, diese Nachteile zumindest teilweise zu beheben. Insbesondere ist es eine Aufgabe der Erfindung, eine zumindest teilweise automatisierte komplementäre Nutzung von Funktionalitäten verschiedener Geräte zu ermöglichen und/oder zu verbessern. Insbesondere ist es eine Aufgabe der vorliegenden Erfindung, die datentechnische Kommunikation zwischen verschiedenen Geräten zu verbessern und/oder zu vereinfachen.

Die voranstehende Aufgabe wird gelöst durch ein Verfahren mit den Merkmalen des Anspruchs 1 und durch eine Vorrichtung mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Vorrichtung, und jeweils umgekehrt, sodass bezüglich der Offenbarung zu den einzelnen Erfindungsaspekten stets wechselseitig Bezug genommen wird bzw. werden kann.

Die Aufgabe wird durch ein Verfahren gemäss Anspruch 1 gelöst.

So kann bspw. das erste Gerät als eine Küchenmaschine ausgeführt sein, sodass das erste Gerät z. B. eine erste Funktionalität zum Mixen und/oder eine zweite Funktionalität zum Schneiden und/oder eine dritte Funktionalität zum Erwärmen von Lebensmitteln aufweist. Insbesondere umfasst die Küchenmaschine eine Heizung und/oder ein Rührwerk und/oder eine Waage und/oder eine Recheneinheit zur zumindest teilweise automatischen Zubereitung von Lebensmitteln. Bevorzugt umfasst die Küchenmaschine eine Schnittstelleneinheit zur Verbindung mit einem Netzwerk, insbesondere einem Local Area Network (LAN-Netzwerk) und/oder einem Wireless-LAN(WLAN)-Netzwerk. Besonders bevorzugt weist die Küchenmaschine eine Eingabe- und/oder Ausgabevorrichtung auf, welche bspw. als ein Touchscreen ausgeführt ist. Dies ermöglicht eine einfache Eingabe von Benutzereingaben oder Ausgabe von Informationen.

Hierbei ist denkbar, dass eine Globalebene (zur Kommunikation der Geräte) vorgesehen ist, an welche die Geräte mindestens eine Anfrageinformation und mindestens eine Antwortinformation übertragen können, sodass die (jeweiligen) Funktionalitäten der Geräte insbesondere komplementär genutzt werden können. Die Globalebene umfasst vorzugsweise ein oder mehrere (digitale) Schnittstellen und/oder (digitale) Übertragungsmechanismen. Vorzugsweise umfasst die Globalebene wenigstens ein Datenprotokoll zum Datentransport und/oder dergleichen. Bevorzugt wird die Globalebene durch eine elektronische Verarbeitungseinheit, insbesondere einen Computer und/oder einen Prozessor oder dergleichen, bereitgestellt.

Unter "komplementär" ist in diesem Zusammenhang insbesondere zu verstehen, dass ein Benutzer und/oder das erste Gerät neben (seiner eigenen) Funktionalität des ersten Geräts ergänzend die Funktionalität mindestens eines weiteren Geräts, insbesondere des zweiten Geräts, nutzen kann, und/oder umgekehrt. Dies ist insbesondere dann vorteilhaft, wenn durch eines der Geräte eine Rezeptverarbeitung erfolgt, sodass eine komplexere Zubereitung von Lebensmitteln mit mehreren Zubereitungsschritten (und/oder Funktionsschritten) notwendig ist, die somit auch gleichzeitig erfolgen können, um Zeit einzusparen. Die Zubereitungsschritte können bspw. Funktionsschritte umfassen wie das Braten und/oder Kochen und/oder Schneiden und/oder Backen und/oder Toasten und/oder Rühren und/oder (Dampf-)Garen und/oder dergleichen. Insbesondere umfassen die Zubereitungsschritte und/oder Funktionsschritte auch Parameter, wie die Kochtemperatur und/oder die Garzeit. Da aufgrund der Vielzahl verschiedener Rezepte ein einzelnes Gerät oft nicht sämtliche Funktionen unterstützen kann, ist es notwendig, mehrere Geräte für das vollständige Rezept einzusetzen. Entsprechend müssen die Funktionalitäten der Geräte komplementär und häufig zeitlich aufeinander abgestimmt eingesetzt werden. Dies erfolgt üblicherweise manuell, bspw. durch einen Benutzer bzw. Koch, welcher verschiedene Küchengeräte bedient.

Bevorzugt ermöglicht dabei das erfindungsgemäße Verfahren eine zumindest teilweise oder vollständig automatisierte Verarbeitung von Rezepten und/oder komplementäre Nutzung der Funktionalitäten verschiedener Geräte.

Bevorzugt wird hierzu zumindest einer der nachfolgenden Schritte durchgeführt, vorzugsweise nacheinander oder in beliebiger Reihenfolge, wobei bevorzugt einzelne Schritte auch wiederholt durchgeführt werden können:
a) Erzeugen und/oder Bereitstellen der wenigstens einen Anfrageinformation am ersten Gerät, wobei die Anfrageinformation in Abhängigkeit von einer verfügbaren Funktionalität und/oder einem Betrieb (z.B. einer Rezeptverarbeitung) des ersten Gerätes erzeugt wird, wobei bspw. der Betrieb eine Rezeptverarbeitung und/oder die Funktionalität eine Lebensmittelzubereitungsfunktion umfasst,
b) Übertragen der Anfrageinformation an die Globalebene, insbesondere durch das erste Gerät und/oder durch eine Schnittstelleneinheit,
c) Empfangen der Anfrageinformation von mindestens dem zweiten Gerät, welches vorzugsweise mit der Globalebene verbunden ist, insbesondere von weiteren Geräten oder jedem Gerät, welches mit der Globalebene verbunden ist (insbesondere mit Ausnahme des ersten Gerätes),
d) Auswerten der Anfrageinformation zumindest am zweiten und/oder am weiteren und/oder an jedem Gerät (insbesondere mit Ausnahme des ersten Geräts), wobei die Anfrageinformation mit der am zweiten und/oder weiteren und/oder jedem Gerät verfügbaren Funktionalität verglichen wird (insbesondere durch das zweite oder weitere Gerät), sodass die Antwortinformation in Abhängigkeit von diesem Vergleich (der Anfrageinformation mit der verfügbaren Funktionalität) erzeugt und/oder bereitgestellt wird, und insbesondere die Antwortinformation Informationen über die verfügbare Funktionalität des Geräts aufweist,
   wobei bevorzugt anhand der Antwortinformation eine Anpassung des Betriebs des ersten Gerätes erfolgt.

Mit anderen Worten wird insbesondere durch die Übertragung und Auswertung der Anfrage-und Antwortinformationen ein Frage-Antwort-Dialog in Gang gesetzt, welcher einem Aushandeln und Abstimmen der Funktionalitäten dient, sodass eine optimale komplementäre (sowie zeitlich optimierte) Nutzung ermöglicht wird. Das erfindungsgemäße Verfahren hat insbesondere den Vorteil, dass eine Kommunikation zur Bereitstellung der Funktionalitäten mit einer hohen Gerätekompatibilität und Flexibilität bereitgestellt werden kann. So ist es bspw. auch denkbar, dass einige Geräte die durch die Anfrageinformation vorgegebene Funktionalität nur teilweise oder eingeschränkt unterstützen oder anderweitig benutzt werden. In diesem Fall kann bspw. durch das erste Gerät ausgewertet werden, welche anderen Geräte diese Funktionalität in größerem Umfang unterstützten oder ob die eingeschränkte Funktionalität durch andere Geräte kompensiert werden kann. Entsprechend können die Schritte a) bis d) zumindest teilweise auch iterativ erfolgen, wobei dann eine (gemäß Schritt a)) neu erzeugte Anfrageinformation in Abhängigkeit von der letzten Antwortinformation (gemäß Schritt d)) erzeugt wird.

Bevorzugt sind die Geräte vollständig separat und/oder räumlich beabstandet voneinander ausgeführt. Es handelt sich somit um separate Geräte, welche bspw. nicht direkt miteinander in Verbindung stehen, insbesondere keine direkte Kommunikationsverbindung untereinander aufweisen (d. h. lediglich indirekt über die Globalebene). Bevorzugt umfasst jedes Gerät eine Elektronik, welche jeweils unabhängig voneinander arbeiten. Insbesondere sind sämtliche Geräte unterschiedlich und/oder baulich getrennt voneinander ausgeführt.

Insbesondere erfolgt die Erzeugung der Anfrageinformation auf Grundlage eines Rezeptschrittes, vorzugsweise dann, wenn das erste Gerät die Funktionalität nicht bereitstellen kann, welche durch den Rezeptschritt gefordert wird. Beispielsweise wird gemäß einer ersten übertragenen Anfrageinformation ein Garen von einem Lebensmittel im Backofen für eine Dauer von 5 Min. (Minuten) mit gleichzeitigem Grillen gefordert. Es kann möglich sein, dass ein weiteres Gerät diese Funktionalität voll oder nur teilweise bereitstellen kann. Gemäß den daraufhin erzeugten Antwortinformationen verschiedener Geräte kann von einem zweiten Gerät bspw. nur das Garen ohne Grillen und von einem dritten Gerät nur das Grillen ohne Garen erfolgen. Gemäß den daraufhin in Abhängigkeit von diesen Antwortinformationen neu generierten Anfrageinformationen kann dann bspw. das Garen und das Grillen jeweils separat angefordert werden, bspw. gemäß einer zweiten übertragenen Anfrageinformation ein Garen für 4 Min. und gemäß einer dritten übertragenen Anfrageinformation ein Grillen für 1 Min. Insbesondere werden als Reaktion auf diese neuen Anfrageinformationen erneut Antwortinformationen der Geräte übertragen, welche insbesondere teilweise positive Antwortinformationen sind, also die Verfügbarkeit der angeforderten Funktionalität indizieren.

Bevorzugt ist die Anfrageinformation als eine Anfrage ausgeführt, ob irgendein Gerät eine bestimmte Funktionalität und/oder einen bestimmten Zubereitungsschritt und/oder einen bestimmten Funktionsschritt anbieten kann. Alternativ oder zusätzlich ist die Anfrageinformation unabhängig von einem bestimmten Gerät, sodass kein bestimmtes Gerät direkt adressiert wird. Mit anderen Worten ist die Anfrageinformation als eine Broadcast-Information ausgeführt, insbesondere für sämtliche Geräte, welche mit der Globalebene verbunden sind. Besonders bevorzugt wird durch die Anfrageinformation keine Punkt-zu-Punkt Verbindung oder dergleichen initiiert, sondern es wird gemäß dem erfindungsgemäßen Verfahren stets ein Frage-Antwort-Dialog über die Globalebene ohne konkrete Adressierung der einzelnen Geräte (d. h. als Broadcast) durchgeführt. Bevorzugt geht jede Kommunikationsverbindung nicht über das Aussenden einer Anfrageinformation und das Beantworten mit der Antwortinformation hinaus, sodass nach dem Empfang der Antwortinformation die Verbindung beendet ist. Gemäß einem weiteren Vorteil kann die Kommunikation zwischen verschiedenen Geräten (insbesondere zwischen dem ersten und zweiten Gerät) auch verbindungslos erfolgen.

Insbesondere wird die Anfrageinformation nicht direkt von dem ersten Gerät an das zweite Gerät übertragen, sondern zunächst an die Globalebene übermittelt. Bevorzugt erfolgt die Kommunikation zwischen den Geräten niemals direkt und/oder stets indirekt über die Globalebene. Dies hat den Vorteil, dass eine hohe Gerätekompatibilität für die Kommunikation gewährleistet wird, da das erste Gerät nicht die Kommunikationsschnittstellen jedes anderen Geräts kennen muss, und/oder umgekehrt, sondern insbesondere nur die Schnittstelle der Globalebene.

Vorteilhaft ist es zudem, wenn die Anfrageinformation gemäß Schritt a) am ersten Gerät in einem ersten Format erzeugt wird, wobei das erste Format für das erste Gerät spezifisch ist, und wobei zur Übertragung gemäß Schritt b) die Anfrageinformation vom ersten Format in ein Globalformat umgewandelt wird. Insbesondere ist das erste Format abhängig von einer Elektronik, insbesondere von einer Recheneinheit, des ersten Geräts. Des Weiteren kann es möglich sein, dass die Umwandlung von dem ersten Format in das Globalformat durch das erste Gerät selbst oder separat vom ersten Gerät erfolgt. Das Format ist dabei bspw. ein Datenformat und/oder ein Übertragungsformat. Bevorzugt ist das Globalformat ein geräteübergreifendes Format, welches durch das erste und/oder zweite und/oder durch weitere Geräte und/oder durch Adapter und/oder Schnittstelleneinheiten für diese Geräte unterstützt wird. Dies hat den Vorteil, dass eine Kommunikation zwischen Geräte ermöglicht werden kann, auch wenn diese die direkte Kommunikation miteinander nicht originär unterstützen.

Ferner kann im Rahmen der Erfindung vorgesehen sein, dass zum Empfangen gemäß Schritt c) die Anfrageinformation vom Globalformat in ein zweites Format umgewandelt wird, wobei das zweite Format für das zweite Gerät spezifisch ist, und für das erste Gerät unbekannt ist. Insbesondere unterscheidet sich das zweite Format des zweiten Geräts vom ersten Format des ersten Geräts und/oder vom Globalformat. Dies hat den Vorteil, dass eine Kommunikation auch zwischen dem ersten und zweiten Gerät möglich ist, wenn das erste Gerät nicht das Kommunikationsformat (d. h. das zweite Format) des zweiten Geräts kennt.

Vorteilhafterweise kann bei der Erfindung vorgesehen sein, dass für das erste Gerät und/oder für das zweite Gerät und/oder für weitere Geräte jeweils eine Schnittstelleneinheit vorgesehen ist, insbesondere als Adapter für die Globalebene, wobei vorzugsweise die Schnittstelleneinheit ein erstes oder zweites oder weiteres Format in ein Globalformat umwandelt und/oder umgekehrt, und insbesondere ein Befehlssyntax und/oder Befehle des ersten Formats von dem Befehlssyntax und/oder den Befehlen des zweiten Formats und/oder weiteren Formaten sich unterscheidet. Die Befehle können dabei bspw. Informationen für eine Ansteuerung des Betriebs zumindest eines der Geräte umfassen, bspw. einer Einstellung für eine Kochtemperatur und/oder für eine Garzeit und/oder dergleichen. Dies hat den Vorteil, dass in einfacher Weise unterschiedliche Funktionalitäten verschiedener Geräte genutzt werden können.

Es kann weiter möglich sein, dass die Geräte und/oder das erste Gerät und/oder das zweite Gerät über eine Schnittstelleneinheit oder eine Verbindungseinheit mit der Globalebene verbunden sind. Die (bspw. elektrische) Verbindung des Gerätes (insbesondere des ersten und/oder zweiten Gerätes) zur Globalebene, insbesondere über die Schnittstelleneinheit oder die Verbindungseinheit, erfolgt dabei bspw. über eine LAN- und/oder WLAN- und/oder Bluetooth- und/oder NFC- und/oder Mobilfunk- und/oder Funk- und/oder mechanische und/oder elektrische und/oder optische und/oder akustische und/oder magnetische und/oder Powerline-Schnittstelle. Dies ermöglicht eine einfache und zuverlässige Informationsübertragung.

Des Weiteren ist es denkbar, dass die Geräte jeweils unabhängig voneinander durch einen Bediener durch eine jeweilige Benutzerschnittstelle der Geräte bedient werden, wobei insbesondere ein zweites Gerät als Ofen oder Mikrowelle oder Toaster oder Kühlschrank oder als eine weitere Küchenmaschine ausgeführt ist. Selbstverständlich ist es auch möglich, dass zumindest eines der Geräte als ein sonstiges Haushaltsgerät ausgeführt ist, wie bspw. eine Musikanlage, eine Beleuchtung oder dergleichen. Auf diese Weise kann es z. B. auch möglich sein, dass das erste Geräte durch die Anfrageinformation eine Beleuchtung, z. B. in der Küche oder im Wohnzimmer, ansteuert. Dies kann dann bspw. auch rezeptabhängig von einer Rezeptverarbeitung des ersten Geräts erfolgen. Somit ist eine besonders flexible und anpassungsfähige Nutzung verschiedener Geräte möglich.

Ein weiterer Vorteil im Rahmen der Erfindung ist erzielbar, wenn weitere Geräte vorgesehen sind, welche unterschiedliche Funktionalitäten aufweisen, und welche mit der Globalebene verbunden sind, und wobei die gemäß Schritt b) übertragene Anfrageinformation von den weiteren Geräten empfangen werden, sodass die weiteren Geräte jeweils zumindest einen der nachfolgenden Schritte durchführen, vorzugsweise nacheinander oder in beliebiger Reihenfolge:
- die Anfrageinformation auswerten,
- mit der jeweiligen verfügbaren Funktionalität vergleichen,
- eine jeweilige Antwortinformation in Abhängigkeit von diesen Vergleichen und/oder der jeweiligen Funktionalität erzeugen, und
- die Antwortinformation an die Globalebene übertragen.

Insbesondere kann dabei die Globalebene erweiterbar für weitere Geräte ausgeführt sein. Somit wird gewährleistet, dass auch die Funktionalitäten erweitert werden können.

Ferner ist es denkbar, dass durch die Anfrageinformation eine Anforderung an eine Funktionalität eines potentiellen Gerätes vorgegeben wird, wobei insbesondere die Anfrageinformation hierzu Informationen über eine vorgegebene Zubereitung und/oder Verarbeitung eines Lebensmittels und/oder eine Zubereitungsart und/oder eine konkrete Funktionalität des potentiellen Gerätes aufweist. Mit anderen Worten kann es möglich sein, dass das erste Gerät nicht das spezielle Gerät kennt, sondern lediglich eine Anforderung an eine konkrete Funktionalität unabhängig von einem speziellen Gerät. Das erste Gerät kann dann die Anfrageinformation an die Globalebene übertragen, um so zu ermitteln, welches Gerät diese konkrete Funktionalität unterstützt. Dies wird durch eine Auswertung der daraufhin erzeugten Antwortinformationen möglich.

Ferner ist es optional vorgesehen, dass die weiteren Geräte und/oder das zweites Gerät eine negative Antwortinformation an die Globalebene übertragen, wenn die jeweilige Funktionalität des/der weiteren und/oder zweiten Geräts nicht eine Anforderung an die Funktionalität erfüllt, welche durch die Anfrageinformation gestellt wird. Es kann aber möglich sein, dass die negative Antwortinformation lediglich die Information umfasst, dass die Funktionalität nicht erfüllt wird. Alternativ oder zusätzlich kann es auch möglich sein, dass eine derartige (negative) Antwortinformation vorgesehen ist, welche Informationen über eine alternative Funktionalität aufweist. Auf diese Weise kann bspw. die Anforderung an die Funktionalität durch das erste Gerät angepasst werden, um so bspw. einen Kompromiss zu erzielen (bspw. wurde ursprünglich eine Temperatur von 200°C angefordert, und die negative Antwortinformation enthält die Information, dass lediglich 180°C bereitgestellt werden können. Dies kann dann bspw. durch das erste Gerät akzeptiert oder nicht akzeptiert werden. Im Falle einer Akzeptanz wird dann eine weitere Anfrageinformation mit der Anforderung zur Bereitstellung von 180 °C an die Globalebene übertragen.). Entsprechend kann es insbesondere möglich sein, dass das erste Gerät ausschließlich Anfrageinformationen (insbesondere als Broadcast) als Reaktion auf Antwortinformationen überträgt, und damit vorzugsweise nicht in die direkte Kommunikation mit dem zweiten Gerät eintritt.

Insbesondere erfolgt die Ansteuerung der wenigstens zwei Geräte koordiniert, sodass der Betrieb der Geräte in Abhängigkeit von einer Auswertung der Anfrageinformation und/oder Antwortinformation durchgeführt wird. Bspw. ist somit eine komplementäre Nutzung der Funktionalitäten verschiedener Geräte zur Rezeptverarbeitung möglich.

Des Weiteren ist es im Rahmen der Erfindung optional möglich, dass die negative Antwortinformation Informationen über eine alternative Funktionalität aufweist, welche für das jeweilige Gerät spezifisch ist. Bspw. kann dann das erste Gerät die alternative Funktionalität auswerten und eine Entscheidung durchführen, ob die alternative Funktionalität verwendet werden soll. Insbesondere kann dann in Abhängigkeit von dieser Entscheidung eine weitere Anfrageinformation an die Globalebene übertragen werden.

Vorteilhaft ist es darüber hinaus, wenn im Rahmen der Erfindung das zweite Gerät und/oder die weiteren Geräte jeweils auch eine Anfrageinformation an die Globalebene übertragen, sodass insbesondere auch das erste Gerät als Reaktion auf den Empfang dieser Anfrageinformation eine Antwortinformation erzeugt und an die Globalebene überträgt. Bspw. ist es möglich, dass ein Benutzer, insbesondere durch eine Benutzereingabe, entscheidet, welches Gerät die Anfrageinformation übertragen kann.

In einer weiteren Möglichkeit kann vorgesehen sein, dass die Kommunikation der Geräte über die Globalebene geräteunabhängig erfolgt, sodass das erste Gerät für das zweite Gerät und/oder für weitere Geräte unbekannt ist, und/oder umgekehrt. Insbesondere ist es denkbar, dass die Kommunikation der einzelnen Geräte lediglich globalebenenabhängig erfolgt, sodass ein Globalformat für die Globalebene von jedem Gerät bekannt sein muss.

Es kann weiter möglich sein, dass das erste Gerät eine vorbestimmte Funktionsabfolge mit mindestens zwei Funktionsschritten auswertet, wobei mindestens ein erster Funktionsschritt von der Funktionalität des ersten Gerätes unterstützt wird, sodass dieser erster Funktionsschritt von dem ersten Gerät durchgeführt wird, und mindestens ein zweiter Funktionsschritt von der Funktionalität des ersten Gerätes nicht unterstützt wird, sodass für diesen zweiten Funktionsschritt die nachfolgenden Schritte durch das erste Gerät durchgeführt werden:
- Erzeugen der Anfrageinformation in Abhängigkeit von dem zweiten Funktionsschritt,
- Übertragen der Anfrageinformation an die Globalebene, (anschließend erfolgt insbesondere ein Empfangen der Anfrageinformation und/oder Erzeugen der Antwortinformation und/oder Übertragen der Antwortinformation an die Globalebene durch das zweite Gerät oder durch weitere Geräte),
- Empfangen der wenigstens einen Antwortinformation von der Globalebene, wobei die Antwortinformation eine Information darüber umfasst, ob der zweite Funktionsschritt von dem zweiten Gerät und/oder einem weiteren Gerät unterstützt wird,
- Initiierung der Durchführung des zweiten Funktionsschritts dadurch, dass eine weitere Anfrageinformation erzeugt und an die Globalebene übertragen wird.

Hierdurch ist eine zuverlässige und einfache komplementäre Nutzung der verschiedenen Funktionalitäten der Geräte möglich.

Ferner ist es denkbar, dass ein zweites Gerät eine, insbesondere weitere, Anfrageinformation empfängt und auswertet, sodass in Abhängigkeit von der Anfrageinformation ein Betrieb des zweiten Gerätes, insbesondere zur Durchführung eines zweiten Funktionsschritts, durchgeführt wird, wobei bevorzugt eine Funktionsabfolge oder weitere Funktionsschritte der Funktionsabfolge für das zweite Gerät unbekannt sind. Selbstverständlich ist der Empfang von weiteren Anfrageinformationen auch für weitere Funktionsschritte und/oder Funktionsabfolgen denkbar, sodass auch aufwendige und komplexe bzw. Funktionsabfolgen durch die Geräte komplementär durchgeführt werden können.

Ferner ist es optional vorgesehen, dass die Anfrageinformation zumindest eine der nachfolgenden Befehle und/oder Anfragen aufweisen kann:
- Einstellen einer bestimmten Ofentemperatur,
- Einstellen einer bestimmten Mixerdrehzahl,
- Garen eines Lebensmittels für eine bestimmte (Zeit-)Dauer mit einer bestimmten Temperatur,
- Kochen eines Lebensmittels bis zu einer bestimmten Konsistenz,
wobei insbesondere die Anfrageinformation in Abhängigkeit von einer Funktionsabfolge, insbesondere eines Rezeptes, parametrisiert wird. Bevorzugt ist es dabei denkbar, dass die Anfrageinformation nicht den konkreten Parameter zum Erzielen eines Ergebnisses umfasst (z. B. eine Gardauer), sondern stattdessen Informationen über das Ergebnis umfasst (bspw. eine bestimmte Konsistenz des Lebensmittels). Dies ermöglicht, dass es dem Gerät, welches die Anfrageinformation empfängt, überlassen wird, wie es das vorgegebene Ergebnis erreicht.

Ebenfalls Gegenstand der Erfindung ist eine Vorrichtung mit zumindest einer Schnittstelleneinheit zur Durchführung eines erfindungsgemäßen Verfahrens. Damit bringt die erfindungsgemäße Vorrichtung die gleichen Vorteile mit sich, wie sie ausführlich mit Bezug auf das erfindungsgemäße Verfahren beschrieben wurden. Die erfindungsgemäße Vorrichtung ist dabei bspw. als ein Computer mit einem Computerprogramm und/oder als eine Recheneinheit ausgeführt. Bevorzugt dient die Schnittstelleinheit zur Verbindung mit dem ersten und/oder dem zweiten und/oder weiteren Geräten, um eine Kommunikation mit der Globalebene zu ermöglichen. Bevorzugt ist dabei die Recheneinheit im ersten und/oder zweiten und/oder in den weiteren Geräten integriert. Auch ist die Erfindung auf ein System mit der erfindungsgemäßen Vorrichtung und den dazu gehörenden Geräten, die das erfindungsgemäße Verfahren ermöglichen, gerichtet.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung zur Visualisierung eines erfindungsgemäßen Verfahrens,
- Figur 2 bis 6: weitere schematische Darstellungen zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

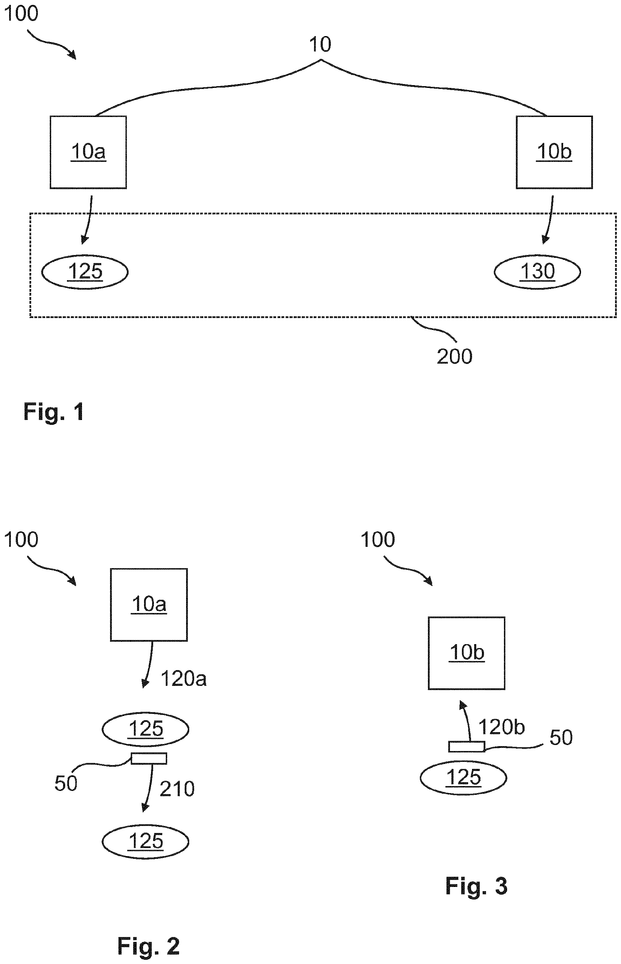

In Figur 1 wird schematisch ein erfindungsgemäßes Verfahren 100 visualisiert. Das erfindungsgemäße Verfahren 100 dient dabei zur koordinierten Ansteuerung von mindestens zwei Geräten 10, wobei mindestens ein erstes Gerät 10a, vorzugsweise als eine Küchenmaschine 10a, und ein zweites Gerät 10b vorgesehen sind. Diese sind insbesondere räumlich beabstandet und/oder vollständig separat voneinander ausgeführt.

Des Weiteren ist eine Globalebene 200 vorgesehen, an welche die Geräte 10 mindestens eine Anfrageinformation 125 und mindestens eine Antwortinformation 130 übertragen können. Dies ermöglicht, dass die Funktionalitäten der Geräte 10 komplementär genutzt werden können.

Gemäß Figur 2 ist gezeigt, dass die Anfrageinformation 125 am ersten Gerät 10a in einem ersten Format 120a erzeugt werden kann, und anschließend zur Übertragung an die Globalebene 200 von dem ersten Format 120a in ein Globalformat 210 umgewandelt wird. Diese Umwandlung und/oder die Verbindung zur Globalebene 200 kann dabei insbesondere durch eine Schnittstelleneinheit 50 erfolgen.

Anschließend kann es möglich sein, dass das zweite Gerät 10b oder weitere Geräte 10 die Anfrageinformation 125 dadurch empfangen, dass eine weitere Schnittstelleneinheit 50 der jeweiligen Geräte 10 die Anfrageinformation 125 (von dem Globalformat 210) in ein zweites Format 120b (für das zweite Gerät 10b) bzw. in weitere Formate für die weiteren Geräte 10 umwandelt.

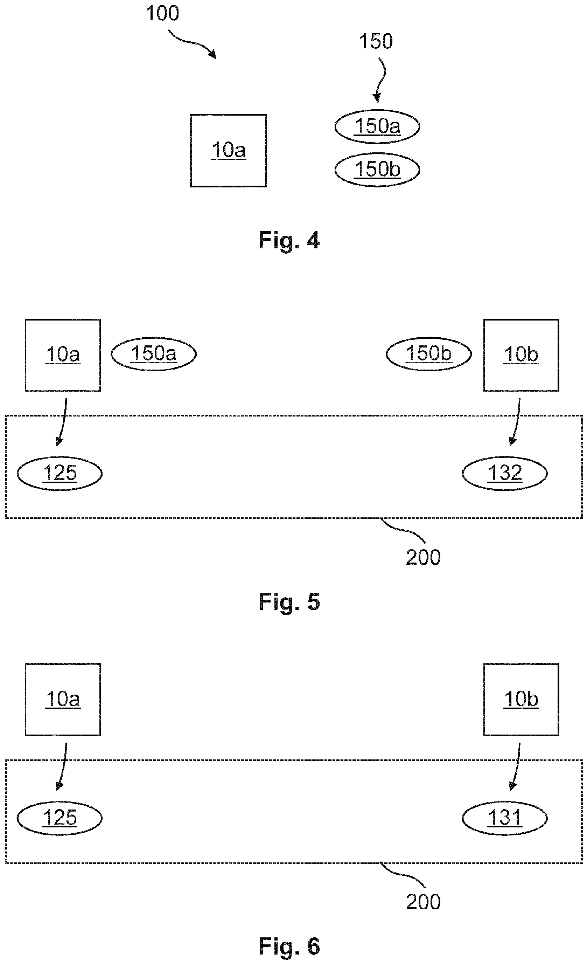

In Figur 4 ist zu sehen, dass das erste Gerät 10 eine vorbestimmte Funktionsabfolge mit mindestens zwei Funktionsschritten 150 auswerten kann, wobei mindestens ein erster Funktionsschritt 150a von der Funktionalität des ersten Geräts 10a unterstützt wird, und mindestens ein zweiter Funktionsschritt 150b von der Funktionalität des ersten Geräts 10a nicht unterstützt wird. In diesem Fall erzeugt das erste Gerät 10a eine Anfrageinformation 125 in Abhängigkeit von dem zweiten Funktionsschritt 150b.

Gemäß Figur 5 ist angedeutet, dass der zweite Funktionsschritt 150b von der Funktionalität des zweiten Geräts 10b unterstützt wird. In diesem Fall überträgt das zweite Gerät 10b als Reaktion auf die Anfrageinformation 125 eine positive Antwortinformation 132 an die Globalebene 200.

Hingegen ist in Figur 6 gezeigt, dass der zweite Funktionsschritt 150b von dem zweiten Gerät 10b nicht unterstützt wird. In diesem Fall überträgt das zweite Gerät 10b als Reaktion auf die Anfrageinformation 125 eine negative Antwortinformation 131 an die Globalebene 200.

Die voranstehende Erläuterung der Ausführungsformen beschreibt die vorliegende Erfindung ausschließlich im Rahmen von Beispielen.

### Bezugszeichenliste

- 10: Gerät

- 10a: erstes Gerät, Küchenmaschine
- 10b: zweites Gerät

- 50: Schnittstelleneinheit

- 100: Verfahren

- 120a: erstes Format
- 120b: zweites Format

- 125: Anfrageinformation

- 130: Antwortinformation
- 131: negative Antwortinformation
- 132: positive Antwortinformation

- 150: Funktionsschritten
- 150a: erste Funktionsschritte
- 150b: zweite Funktionsschritte

- 200: Globalebene
- 210: Globalformat

## Patentansprüche

1. Verfahren (100) zur koordinierten Ansteuerung von mindestens zwei Geräten (10), wobei mindestens ein erstes Gerät (10a), vorzugsweise eine Küchenmaschine (10a), und ein zweites Gerät (10b) vorgesehen sind, welche sich in Bezug auf eine jeweilige Funktionalität unterscheiden,
**dadurch gekennzeichnet,**
**dass** eine Globalebene (200) vorgesehen ist, an welche die Geräte (10) mindestens eine Anfrageinformation (125) und mindestens eine Antwortinformation (130) übertragen, sodass die Funktionalitäten der Geräte (10) komplementär genutzt werden,
wobei hierzu zumindest die nachfolgenden Schritte durchgeführt werden:
a) Erzeugen der Anfrageinformation (125) am ersten Gerät (10a), wobei die Anfrageinformation (125) in Abhängigkeit von einer verfügbaren Funktionalität und einem Betrieb des ersten Gerätes (10a) erzeugt wird,
b) Übertragen der Anfrageinformation (125) an die Globalebene (200),
c) Empfangen der Anfrageinformation (125) von mindestens dem zweiten Gerät (10b),
d) Auswerten der Anfrageinformation (125) zumindest am zweiten Gerät (10b), wobei die Anfrageinformation (125) mit der am zweiten Gerät (10b) verfügbaren Funktionalität verglichen wird, sodass die Antwortinformation (130) in Abhängigkeit von diesem Vergleich erzeugt wird,
wobei anhand der Antwortinformation (130) eine Anpassung des Betriebs des ersten Gerätes (10a) erfolgt.

2. Verfahren (100) nach Anspruch 1,
**dadurch gekennzeichnet,**
**dass** die Anfrageinformation (125) gemäß Schritt a) am ersten Gerät (10a) in einem ersten Format (120a) erzeugt wird, wobei das erste Format (120a) für das erste Gerät (10a) spezifisch ist, und wobei zur Übertragung gemäß Schritt b) die Anfrageinformation (125) vom ersten Format (120a) in ein Globalformat (210) umgewandelt wird.

3. Verfahren (100) nach Anspruch 1 oder 2,
**dadurch gekennzeichnet,**
**dass** zum Empfangen gemäß Schritt c) die Anfrageinformation (125) vom Globalformat (210) in ein zweites Format (120b) umgewandelt wird, wobei das zweite Format (120b) für das zweite Gerät (10b) spezifisch ist, und für das erste Gerät (10a) unbekannt ist.

4. Verfahren (100) nach einem der vorhergehenden Ansprüche,
**dadurch gekennzeichnet,**
**dass** für das erste Gerät (10a) und/oder für das zweite Gerät (10b) und/oder für weitere Geräte (10) jeweils eine Schnittstelleneinheit (50) vorgesehen ist, wobei die Schnittstelleneinheit (50) ein erstes oder zweites oder weiteres Format (120a, 120b) in ein Globalformat (210) umwandelt und/oder umgekehrt, und insbesondere ein Befehlssyntax und/oder Befehle des ersten Formats (120a) von dem Befehlssyntax und/oder den Befehlen des zweiten Formats (120b) und/oder weiteren Formaten sich unterscheidet.

5. Verfahren (100) nach einem der vorhergehenden Ansprüche,
**dadurch gekennzeichnet,**
**dass** die Geräte (10) jeweils unabhängig voneinander durch einen Bediener durch eine jeweilige Benutzerschnittstelle der Geräte (10) bedient werden, wobei insbesondere ein zweites Gerät (10b) als Ofen oder Mikrowelle oder Toaster oder Kühlschrank oder als eine weitere Küchenmaschine (10b) ausgeführt ist.

6. Verfahren (100) nach einem der vorhergehenden Ansprüche,
**dadurch gekennzeichnet,**
**dass** weitere Geräte (10) vorgesehen sind, welche unterschiedliche Funktionalitäten aufweisen, und welche mit der Globalebene (200) verbunden sind, und wobei die gemäß Schritt b) übertragene Anfrageinformation (125) von den weiteren Geräten (10) empfangen werden, sodass die weiteren Geräte (10) jeweils
- die Anfrageinformation (125) auswerten,
- mit der jeweiligen verfügbaren Funktionalität vergleichen,
- eine jeweilige Antwortinformation (130) in Abhängigkeit von diesen Vergleichen und/oder der jeweiligen Funktionalität erzeugen, und
- die Antwortinformation (130) an die Globalebene (200) übertragen.

7. Verfahren (100) nach einem der vorhergehenden Ansprüche,
**dadurch gekennzeichnet,**
**dass** durch die Anfrageinformation (125) eine Anforderung an eine Funktionalität eines potentiellen Gerätes (10) vorgegeben wird, wobei insbesondere die Anfrageinformation (125) hierzu Informationen über eine vorgegebene Zubereitung und/oder Verarbeitung eines Lebensmittels und/oder eine Zubereitungsart und/oder eine konkrete Funktionalität des potentiellen Gerätes (10) aufweist.

8. Verfahren (100) nach einem der vorhergehenden Ansprüche,
**dadurch gekennzeichnet,**
**dass** die weiteren Geräte (10) und/oder das zweites Gerät (10b) eine negative Antwortinformation (131) an die Globalebene (200) übertragen, wenn die jeweilige Funktionalität des weiteren und/oder zweiten Geräts (10, 10b) nicht eine Anforderung an die Funktionalität erfüllt, welche durch die Anfrageinformation (125) gestellt wird.

9. Verfahren (100) nach einem der vorhergehenden Ansprüche,
**dadurch gekennzeichnet,**
**dass** die negative Antwortinformation (131) Informationen über eine alternative Funktionalität aufweist, welche für das jeweilige Gerät (10) spezifisch ist.

10. Verfahren (100) nach einem der vorhergehenden Ansprüche,
**dadurch gekennzeichnet,**
**dass** das zweite Gerät (10b) und/oder die weiteren Geräte (10) jeweils auch eine Anfrageinformation (125) an die Globalebene (200) übertragen, sodass insbesondere auch das erste Gerät (10a) als Reaktion auf den Empfang dieser Anfrageinformation (125) eine Antwortinformation (130) erzeugt und an die Globalebene (200) überträgt.

11. Verfahren (100) nach einem der vorhergehenden Ansprüche,
**dadurch gekennzeichnet,**
**dass** die Kommunikation der Geräte (10) über die Globalebene (200) geräteunabhängig erfolgt, sodass das erste Gerät (10a) für das zweite Gerät (10b) und/oder für weitere Geräte (10) unbekannt ist, und/oder umgekehrt.

12. Verfahren (100) nach einem der vorhergehenden Ansprüche,
**dadurch gekennzeichnet,**
**dass** das erste Gerät (10) eine vorbestimmte Funktionsabfolge mit mindestens zwei Funktionsschritten (150) auswertet, wobei mindestens ein erster Funktionsschritt (150a) von der Funktionalität des ersten Gerätes (10a) unterstützt wird, sodass dieser erster Funktionsschritt (150a) von dem ersten Gerät (10a) durchgeführt wird, und mindestens ein zweiter Funktionsschritt (150b) von der Funktionalität des ersten Gerätes (10a) nicht unterstützt wird, sodass für diesen zweiten Funktionsschritt (150b) die nachfolgenden Schritte durch das erste Gerät (10a) durchgeführt werden:
- Erzeugen der Anfrageinformation (125) in Abhängigkeit von dem zweiten Funktionsschritt (150b),
- Übertragen der Anfrageinformation (125) an die Globalebene (200),
- Empfangen der wenigstens einen Antwortinformation (130) von der Globalebene (200), wobei die Antwortinformation (130) eine Information darüber umfasst, ob der zweite Funktionsschritt (150b) von dem zweiten Gerät (10b) und/oder einem weiteren Gerät (10) unterstützt wird,
- Initiierung der Durchführung des zweiten Funktionsschritts (150b) dadurch, dass eine weitere Anfrageinformation (125) erzeugt und an die Globalebene (200) übertragen wird.

13. Verfahren (100) nach einem der vorhergehenden Ansprüche,
**dadurch gekennzeichnet,**
**dass** ein zweites Gerät (10b) eine, insbesondere weitere, Anfrageinformation (125) empfängt und auswertet, sodass in Abhängigkeit von der Anfrageinformation (125) ein Betrieb des zweiten Gerätes (10b), insbesondere zur Durchführung eines zweiten Funktionsschritts (150), durchgeführt wird, wobei bevorzugt eine Funktionsabfolge oder weitere Funktionsschritte (150) der Funktionsabfolge für das zweite Gerät (10b) unbekannt sind.

14. Verfahren (100) nach einem der vorhergehenden Ansprüche,
**dadurch gekennzeichnet,**
**dass** die Anfrageinformation (125) zumindest einen der nachfolgenden Befehle und/oder Anfragen aufweisen kann:
- Einstellen einer bestimmten Ofentemperatur,
- Einstellen einer bestimmten Mixerdrehzahl,
- Garen eines Lebensmittels für eine bestimmte Dauer mit einer bestimmten Temperatur,
- Kochen eines Lebensmittels bis zu einer bestimmten Konsistenz,
wobei insbesondere die Anfrageinformation (125) in Abhängigkeit von einer Funktionsabfolge, insbesondere eines Rezeptes, parametrisiert wird.

15. Vorrichtung mit zumindest einer Schnittstelleneinheit (50) die eingerichtet ist, das Verfahren gemäß einem der vorhergehenden Ansprüche durchzuführen.

## Claims

1. Method (100) for the coordinated control of at least two appliances (10), wherein at least a first appliance (10a), preferably a food processor (10a), and a second appliance (10b) are provided, which differ with respect to a respective functionality,
**characterized in that**
a global level (200) is provided, to which the devices (10) transmit at least one item of request information (125) and at least one item of response information (130), so that the functionalities of the devices (10) are used in a complementary manner,
wherein at least the following steps being carried out for this purpose:
a) generating the request information (125) at the first device (10a), wherein the request information (125) is generated in response to an available functionality and an operation of the first device (10a),
b) transfer the request information (125) to the global level (200),
c) receiving the request information (125) by at least the second device (10b),
d) evaluating the request information (125) at least at the second device (10b), wherein the request information (125) is compared with the functionality available at the second device (10b), so that the response information (130) is generated in dependence on this comparison,
wherein based on the response information (130), an adjustment of the operation of the first device (10a) is performed.

2. Method (100) according to claim 1,
**characterized in that**
the request information (125) according to step a) is generated at the first device (10a) in a first format (120a), wherein the first format (120a) is specific for the first device (10a), and wherein for transmission according to step b) the request information (125) is converted from the first format (120a) into a global format (210).

3. Method (100) according to claim 1 or 2,
**characterized in that**
for receiving according to step c), the request information (125) is converted from the global format (210) into a second format (120b), the second format (120b) being specific to the second device (10b) and unknown to the first device (10a).

4. Method (100) according to any one of the preceding claims,
**characterized in that**
an interface unit (50) is provided in each case for the first device (10a) and/or for the second device (10b) and/or for further devices (10), the interface unit (50) converting a first or second or further format (120a, 120b) into a global format (210) and/or vice versa, and in particular a command syntax and/or commands of the first format (120a) is differing from the command syntax and/or commands of the second format (120b) and/or further formats.

5. Method (100) according to any one of the preceding claims,
**characterized in that**
the appliances (10) are each operated independently of one another by an operator through a respective user interface of the appliances (10), in particular a second appliance (10b) being designed as an oven or microwave or toaster or refrigerator or as a further food processor (10b).

6. Method (100) according to any one of the preceding claims,
**characterized in that**
further devices (10) are provided which have different functionalities and which are connected to the global level (200), and wherein the request information (125) transmitted according to step b) is received by the further devices (10), so that the further devices (10) each perform at least the following steps:
- evaluate the request information (125),
- compare the request information (125) with the respective available functionality,
- generate a respective response information (130) in dependence on said comparisons and/or respective functionality, and
- transmit the response information (130) to the global level (200).

7. Method (100) according to any one of the preceding claims,
**characterized in that**
the request information (125) specifies a requirement for a functionality of a potential appliance (10), the request information (125) having, in particular for this purpose, information about a specified preparation and/or processing of a foodstuff and/or a preparation method and/or a specific functionality of the potential appliance (10).

8. Method (100) according to any one of the preceding claims,
**characterized in that**
the further devices (10) and/or the second device (10b) transmit negative response information (131) to the global level (200) if the respective functionality of the further and/or second device (10, 10b) does not satisfy a requirement for the functionality imposed by the request information (125).

9. Method (100) according to any one of the preceding claims,
**characterized in that**
the negative response information (131) comprises information about an alternative functionality which is specific to the respective device (10).

10. Method (100) according to any one of the preceding claims,
**characterized in that**
the second device (10b) and/or the further devices (10) each also transmit request information (125) to the global level (200), so that, in particular, the first device (10a) also generates response information (130) in response to the reception of this request information (125) and transmits it to the global level (200).

11. Method (100) according to any one of the preceding claims,
**characterized in that**
the communication of the devices (10) via the global level (200) takes place independently of the device, so that the first device (10a) is unknown to the second device (10b) and/or to further devices (10), and/or vice versa.

12. Method (100) according to any one of the preceding claims,
**characterized in that**
the first device (10) evaluates a predetermined function sequence with at least two function steps (150), wherein at least one first function step (150a) is supported by the functionality of the first device (10a), so that this first function step (150a) is performed by the first device (10a), and at least one second function step (150b) is not supported by the functionality of the first device (10a), so that for this second function step (150b) the following steps are performed by the first device (10a):
- generating the request information (125) in response to the second functional step (150b),
- transfer the request information (125) to the global level (200),
- receiving the at least one response information (130) from the global level (200), wherein the response information (130) comprises information on whether the second functional step (150b) is supported by the second device (10b) and/or a further device (10),
- initiating the execution of the second functional step (150b) by generating and transmitting to the global level (200) further request information (125).

13. Method (100) according to any one of the preceding claims,
**characterized in that**
a second device (10b) receives and evaluates request information (125), in particular further request information (125), so that, as a function of the request information (125), an operation of the second device (10b) is carried out, in particular for carrying out a second function step (150), a function sequence or further function steps (150) of the function sequence preferably being unknown to the second device (10b).

14. Method (100) according to any one of the preceding claims,
**characterized in that**
the request information (125) may comprise at least one of the following commands and/or requests:
- setting a specific oven temperature,
- setting a specific mixer speed,
- cooking a food for a specific duration at a specific temperature,
- cooking a food to a certain consistency,
wherein in particular the request information (125) is parameterized in dependence on a function sequence, in particular a recipe.

15. Apparatus comprising at least one interface unit (50) adapted to perform the method according to any one of the preceding claims.

## Revendications

1. Procédé (100) pour la commande coordonnée d'au moins deux dispositifs (10), dans lequel sont prévus au moins un premier dispositif (10a), de préférence un robot ménager (10a), et un deuxième dispositif (10b), qui se distinguent par une fonctionnalité respective,
**caractérisé en ce**
**qu'**il est prévu un niveau global (200) auquel les dispositifs (10) transmettent au moins une information de demande (125) et au moins une information de réponse (130), de sorte que les fonctionnalités des dispositifs (10) sont utilisées de manière complémentaire,
dans lequel au moins les étapes suivantes sont réalisées à cet effet :
a) générer les informations de demande (125) au niveau du premier dispositif (10a), dans lequel les informations de demande (125) sont générées en fonction d'une fonctionnalité disponible et d'un fonctionnement du premier dispositif (10a),
b) transférer les informations de demande (125) au niveau global (200),
c) recevoir l'information de demande (125) d'au moins le deuxième dispositif (10b),
d) évaluer les informations de demande (125) au moins au niveau du deuxième dispositif (10b), dans lequel les informations de demande (125) sont comparées à la fonctionnalité disponible au niveau du deuxième dispositif (10b) de sorte que les informations de réponse (130) sont générées en fonction de cette comparaison,
dans lequel les informations de réponse (130) sont utilisées pour ajuster le fonctionnement du premier dispositif (10a).

2. Procédé (100) selon la revendication 1,
**caractérisé en ce que**
les informations de demande (125) selon l'étape a) sont générées au niveau du premier dispositif (10a) dans un premier format (120a), dans lequel le premier format (120a) est spécifique au premier dispositif (10a), et dans lequel pour la transmission selon l'étape b) les informations de demande (125) sont converties du premier format (120a) en un format global (210).

3. Procédé (100) selon la revendication 1 ou 2,
**caractérisé en ce que**
pour la réception selon l'étape c), les informations de demande (125) sont converties du format global (210) en un second format (120b), le second format (120b) étant spécifique au second dispositif (10b) et inconnu du premier dispositif (10a).

4. Procédé (100) selon l'une quelconque des revendications précédentes,
**caractérisé en ce**
**qu'**une unité d'interface (50) est prévue pour le premier dispositif (10a) et/ou pour le deuxième dispositif (10b) et/ou pour d'autres dispositifs (10), l'unité d'interface (50) convertissant un premier ou un deuxième ou un autre format (120a, 120b) en un format global (210) et/ou inversement, et en particulier une syntaxe de commande et/ou des commandes du premier format (120a) se distinguant de la syntaxe de commande et/ou des commandes du deuxième format (120b) et/ou d'autres formats.

5. Procédé (100) selon l'une quelconque des revendications précédentes,
**caractérisé en ce que**
les dispositifs (10) sont chacun commandés indépendamment les uns des autres par un opérateur par une unité d'interface utilisateur respective des dispositifs (10), dans lequel en particulier un deuxième dispositif (10b) est conçu comme un four ou un micro-ondes ou un grille-pain ou un réfrigérateur ou comme une autre robot ménager (10b).

6. Procédé (100) selon l'une quelconque des revendications précédentes,
**caractérisé en ce que**
d'autres dispositifs (10) sont prévus qui ont des fonctionnalités différentes et qui sont connectés au niveau global (200), et dans lequel les informations de demande (125) transmises selon l'étape b) sont reçues par les autres dispositifs (10), de sorte que les autres dispositifs (10) sont chacun connectés au niveau global (200)
- évaluer les informations de demande (125),
- comparer avec la fonctionnalité disponible respective,
- générer des informations de réponse respectives (130) en fonction desdites comparaisons et/ou de la fonctionnalité respective, et
- transmettre les informations de réponse (130) au niveau global (200).

7. Procédé (100) selon l'une quelconque des revendications précédentes,
**caractérisé en ce que**
les informations de demande (125) spécifient une exigence pour une fonctionnalité d'un dispositif potentiel (10), les informations de demande (125) comprennent, en particulier, des informations à cette fin concernant une préparation et/ou un traitement spécifié d'une denrée alimentaire et/ou une méthode de préparation et/ou une fonctionnalité spécifique du dispositif potentiel (10).

8. Procédé (100) selon l'une quelconque des revendications précédentes,
**caractérisé en ce que**
les autres dispositifs (10) et/ou le deuxième dispositif (10b) transmettent une information de réponse négative (131) au niveau global (200) si la fonctionnalité respective de l'autre et/ou du deuxième dispositif (10, 10b) ne remplit pas une exigence pour la fonctionnalité qui est faite par l'information de demande (125).

9. Procédé (100) selon l'une quelconque des revendications précédentes,
**caractérisé en ce que**
les informations de réponse négative (131) comprennent des informations sur une fonctionnalité alternative qui est spécifique au dispositif respectif (10).

10. Procédé (100) selon l'une quelconque des revendications précédentes,
**caractérisé en ce que**
le deuxième dispositif (10b) et/ou les autres dispositifs (10) transmettent chacun également une information de demande (125) au niveau global (200), de sorte que, en particulier, le premier dispositif (10a) génère également une information de réponse (130) en réponse à la réception de cette information de demande (125) et la transmet au niveau global (200).

11. Procédé (100) selon l'une quelconque des revendications précédentes,
**caractérisé en ce que**
la communication des dispositifs (10) via le niveau global (200) s'effectue indépendamment du dispositif, de sorte que le premier dispositif (10a) est inconnu du second dispositif (10b) et/ou d'autres dispositifs (10), et/ou vice versa.

12. Procédé (100) selon l'une quelconque des revendications précédentes,
**caractérisé en ce que**
le premier dispositif (10) évalue une séquence de fonction prédéterminée avec au moins deux étapes de fonction (150), au moins une première étape de fonction (150a) étant soutenue par la fonctionnalité du premier dispositif (10a), de sorte que cette première étape de fonction (150a) est exécutée par le premier dispositif (10a), et au moins une deuxième étape de fonction (150b) n'étant pas soutenue par la fonctionnalité du premier dispositif (10a), de sorte que pour cette deuxième étape de fonction (150b), les étapes suivantes sont exécutées par le premier dispositif (10a) :
- générer les informations de demande (125) en réponse à la seconde étape de fonction (150b),
- transmettre les informations de demande (125) au niveau global (200),
- recevoir l'au moins une information de réponse (130) du niveau global (200), dans lequel l'information de réponse (130) comprend des informations sur le fait que la deuxième étape de fonction (150b) est soutenues par le deuxième dispositif (10b) et/ou un autre dispositif (10),
- lancer l'exécution de la seconde étape de fonction (150b) en générant et en transmettant des informations de demande supplémentaires (125) au niveau global (200).

13. Procédé (100) selon l'une quelconque des revendications précédentes,
**caractérisé en ce**
**qu'**un deuxième dispositif (10b) reçoit et évalue des informations de demande (125), en particulier des informations de demande supplémentaires (125), de sorte qu'en fonction des informations de demande (125), une fonctionnement du deuxième dispositif (10b) est exécutée, en particulier pour exécuter une deuxième étape de fonction (150), une séquence de fonction ou d'autres étapes de fonction (150) de la séquence de fonction étant de préférence inconnues pour le deuxième dispositif (10b).

14. Procédé (100) selon l'une quelconque des revendications précédentes,
**caractérisé en ce que**
les informations de demande (125) peuvent comprendre au moins une des commandes et/ou demandes suivantes :
- réglage d'une température de four spécifique,
- réglage d'une vitesse spécifique du mélangeur,
- cuisson d'un aliment pendant une durée déterminée à une température déterminée,
- cuisson d'un aliment jusqu'à une certaine consistance,
dans lequel, en particulier, l'information de demande (125) est paramétrée en fonction d'une séquence de fonctions, notamment d'une recette.

15. Dispositif comprenant au moins une unité d'interface (50) adaptée pour mettre en œuvre le procédé selon l'une quelconque des revendications précédentes.
